Europäisches Patentamt

**European Patent Office**

**Office européen des brevets**

(11) Publication number: **0 052 480**
**A1**

(12) **EUROPEAN PATENT APPLICATION**

(21) Application number: **81305361.8**

(22) Date of filing: **12.11.81**

(51) Int. Cl.³: **B 21 J 15/04**

(30) Priority: **17.11.80 GB 8036801**

(43) Date of publication of application:
**26.05.82 Bulletin 82/21**

(84) Designated Contracting States:
**DE FR GB IT SE**

(71) Applicant: **TUCKER FASTENERS LIMITED**
**Walsall Road**
**Birmingham B42 1BP(GB)**

(84) Designated Contracting States:
**GB**

(71) Applicant: **USM Corporation**
**426 Colt Highway**
**Farmington Connecticut 06032(US)**

(84) Designated Contracting States:
**DE FR IT SE**

(72) Inventor: **James, Peter Andrew**
**61 Larkspur Avenue**
**Hammerwich Walsall WS7 8SR(GB)**

(74) Representative: **Spencer, Hubert John et al,**
**PO Box No. 88 Belgrave Road**
**Leicester LE4 5BX(GB)**

(54) **Lockbolts and methods of and means for setting them.**

㉗ A lockbolt has a collar (26), which may be pressed from sheet metal, swaged into transverse grooves (88) of the bolt progressively from the end of the collar remote from the workpiece along narrow circumferentially spaced segments. The setting tool accordingly has an anvil consituted by a ring of narrow jaws (50) with longitudinally extending ridges to engage the collar (26), shoulders of the jaws initially abutting the collar to clamp the workpiece between them and the head of the bolt. Operation of the tool then causes the jaws to rock about axis close to the periphery of the bolt. The shoulders of the jaws may indent the bolt to cause fracture substantially flush with the collar regardless of the workpiece thickness.

Fig_3

Fig_8

1.

Lockbolts and methods of and means for setting them

This invention is concerned with lockbolts and with a method of setting a lockbolt comprising the steps of inserting the bolt through a hole in the workpiece from one side of the workpiece, passing the collar over the stem projecting at the other side, pushing the collar towards the workpiece while pulling the bolt stem to clamp the workpiece between the collar and the head of the bolt, and then causing material of the collar to be swaged into locking grooves of the bolt. By a lockbolt is to be understood a fastener comprising a headed bolt and a collar, the bolt stem being provided with transverse locking grooves into which material of the collar can be swaged to lock the bolt and collar together.

The invention is also concerned with a lockbolt setting tool comprising a sleeve which has a nosepiece which supports an anvil at its forward end for engagement with the collar of a lockbolt, bolt-pulling means for engaging and pulling the stem of the bolt and which is mounted for axial reciprocation along the sleeve, and power-operated means for effecting a rearward pulling stroke of the bolt-pulling means.

It is customary practice to set a lockbolt by means of a power-operated tool which has an annular anvil which is pushed against the collar of the lockbolt while the stem of the bolt is pulled with the result that material of the collar is swaged into locking grooves of the bolt as the anvil advances towards the workpiece over the collar. The bolt is arranged to break under the continued pulling when the collar has been set, and the tool has means to push against the set collar to pull the anvil off it when the bolt has broken. To enable the bolt to break, it is usually provided with a pre-formed neck. It has, however, been proposed, for example in U.S. patent 2978946, to provide the bolt with uniformly spaced annular locking and pulling grooves and to induce breakage of the bolt substantially flush with the collar by bending the bolt there while it is under high tension.

It has also been proposed, for example in U.S. patent 3698231, to set lockbolts by means of a tool in which the anvil is provided by a split collet which has three arcuate jaw portions arranged, in the operation of the tool, to bear radially inwardly upon the periphery of the collar. Each of the jaws described bears upon substantially the whole length of the collar over an arc of about 120°.

In the prior methods referred to, even when very high setting loads have been developed by the setting tool in order to displace material of the collar into the transverse grooves of the bolt, and even though collars with a large volume of metal in them are used, experience has shown that less material flows into the grooves, and to a smaller depth, than is desirable, and the tensile strength of the set lockbolt is not as high as ought to be obtainable.

The collars of conventional lockbolts are usually cold forged from wire stock, requiring relatively expensive production plant to make them.

It is an object of the present invention to provide an improved method of setting a lockbolt which affords improved locking of the collar to the bolt.

It is another of the objects of the invention to provide an improved lockbolt which affords more flexibility and economy in manufacturing the collar than has been customary heretofore and which is suitable for carrying out the improved method.

It is also an object of the invention to

3.

provide a lockbolt setting tool with improved means for displacing material of the collar into locking grooves of the bolt.

The foregoing objects are achieved in accordance with the invention, so far as its method aspects are concerned, in that the collar is swaged into locking engagement with transverse grooves on the stem of the bolt projecting from a workpiece by the displacement of material of the collar progressively from the end of the collar remote from the workpiece along narrow circumferentially spaced segments extending longitudinally of the bolt. Preferably the transverse grooves on the bolt are annular, the walls of the grooves facing the head of the bolt being more steeply inclined to its axis than those facing away from it. The collar of a lockbolt used in carrying out a method in accordance with the invention, before being set, preferably has a cylindrical wall portion of substantially uniform thickness extending for most of its length from the end remote from the workpiece, the thickness of said wall portion having a ratio of outside diameter to inside diameter lying in the range of 1.15 - 1.26:1. The collar, before being set, preferably has an external flange adjacent the workpiece and displacement of the material of the collar by the jaws progresses into the flange, thus ensuring a high clamping force applied to the workpiece. Material may also enter the hole in the workpiece around the stem of the bolt, thus providing a joint sealed against the passage of water and resistant to vibration.

It is preferred, in carrying out a method according to the invention, that the material of the collar is displaced along from five to twelve segments uniformly spaced around the collar, which can most effectively be achieved by a plurality of jaws which rock about axes at right angles to the lengthwise · direction of the bolt and not substantially further from the bolt axis than the surface of the collar to be engaged by the jaws. Each jaw may have a shoulder which engages the end of the collar remote from the workpiece and a collar-engaging face extending from the shoulder towards the workpiece, the jaws engaging the collar initially by their shoulders at its end remote from the workpiece with their collar-engaging faces splayed outwardly from the collar and then being pressed towards the bolt to displace the material of the collar as aforesaid. · Where the jaws have such shoulders, it is desirable that, prior to the collar-engaging faces of the jaws being pressed towards the bolt, the collar is pushed towards the workpiece by the shoulders of the jaws while the bolt is simultaneously pulled by means engaging the stem further from the workpiece than the shoulders of the jaws to cause the workpiece to be clamped between the collar and the head of the bolt. It is also desirable that the bolt is provided with transverse grooves uniformly along that portion of the stem that is at the locality of the shoulders of the jaws, said shoulders projecting far enough as ridges towards the axis of the bolt to be forced into the material of the bolt to weaken it and thereby cause it to break adjacent the collar under increased tension applied to the bolt stem after setting the collar.

In another of its aspects, the invention provides a lockbolt for setting in the manner described and comprising in addition to a bolt a collar with a relatively thin wall portion of uniform cross-section terminating in a flange at one end. The wall portion

5.

of the collar is preferably cylindrical with a ratio of outside diameter to inside diameter of 1.15-1.26:1; the collar may be made by cold-forming from strip metal. Preferably,also the transverse grooves of the bolt are annular, the walls of the grooves facing the head of the bolt being more steeply inclined to its axis than those facing away from it, and are uniformly spaced along all that length of its stem which will project from the workpiece for engagement both by the collar and by the pulling means of a setting tool.

In accordance with the invention in its lockbolt setting tool aspects, the tool is characterised in that the anvil is constituted by a plurality of individual jaws arranged in a ring within an aperture at the forward end of the sleeve, each jaw having a shoulder to engage the end of the collar remote from the workpiece and a collar-engaging face extending forwardly from the shoulder, the jaws being thus constrained to rock transversely of the axis of the sleeve about the end of the collar when the shoulders are in engagement therewith from open positions in which their collar-engaging faces splay outwardly from the shoulders to closed positions in which the said faces are parallel to the axis of the sleeve, material of the collar during such rocking of the jaws in a lockbolt-setting operation being effective to displace material of the collar progressively from the end engaged by the shoulders of the jaws along narrow circumferentially spaced segments extending longitudinally of the bolt.

Preferably, in a tool in accordance with the invention, the swaging jaws abut one another, a forward portion of each jaw which includes a collar-engaging portion having a pair of flat side faces symmetrically disposed on either side of a longitudinally central plane of the jaw and lying in planes which are radial to the sleeve when the jaws are closed and the faces of adjacent jaws are in contact with one another, and a rearward portion of each jaw having similar side faces which are in contact with one another when the jaws are in their open positions, inner faces of the forward and rearward portions of each jaw thus meeting along a line which is at right angles to said central plane and about which the jaws rock when moving from one position to the other. The swaging jaws may conveniently be arranged to be rocked from their open to their closed positions by advance of the sleeve along the jaws and such that their outer surfaces along at least the forward position in the region where they are engaged by the sleeve described, when the jaws are in their closed positions, a part of a cone of small apical angle, the wider end foremost. The cone angle may be 6$^{\circ}$.

Preferably, in a tool in accordance with the invention, the collar-engaging portions of the jaws extend in the same direction as the side face of the forward portions of the jaws and the ring of jaws is held together by resilient means urging the jaws to their open positions, for example by a resilient band adjacent outwardly projecting flanges at their rear ends.

In a tool in which the swaging jaws are closed by advance of an annular nosepiece or sleeve over outwardly splayed forward portions of the jaws, the wall of the aperture in the sleeve is preferably rounded off at the front to facilitate the sleeve riding over the jaws. The swaging jaws preferably have shoulders which initially push the collar up to the workpiece before the jaws begin to close and thereafter indent the bolt stem so that it breaks close to the end of the collar remote from the workpiece after setting. Indenting the bolt by means of the swaging jaws is, however, optional. The bolt may, for example, be

7.

provided initially in known manner with a neck in its stem at which it will break on setting. The jaws may be chamfered where they engage a flange of the collar.

A tool in accordance with the invention is preferably operated, and the forward end of the bolt pulling means is arranged to engage the rear ends of the jaws on its forward return stroke after setting a collar to cause the sleeve to retract and allow the jaws to open and release the set collar.

There now follows a description, to be read with reference to the accompanying drawings, of a method of setting a lockbolt in accordance with the invention, and of a lockbolt and lockbolt-setting tool used in carrying out such method. It will be realised that this method, lockbolt and setting tool have been selected to illustrate the invention in its several aspects by way of example and not of limitation thereof.

In the accompanying drawings:-

Figure 1 is a view in elevation of the bolt of the illustrative lockbolt;

Figure 2 is a view, partly in section, of the collar of the illustrative lockbolt;

Figure 3 is a perspective view of a nosepiece and anvil of the illustrative lockbolt-setting tool;

Figures 4 and 5 are views in front and side elevation respectively of one of eight jaws of the illustrative tool;

Figure 6 is a view in longitudinal section of a nosepiece, anvil and bolt-pulling means of the illustrative tool shown in association with the illustrative lockbolt ready to set the collar;

Figure 7 is a view similar to Figure 4, but with parts of the tool shown at the end of an operative stroke;

Figure 8 is a perspective view of the collar of the illustrative lockbolt after setting by the illustrative tool;

Figure 9 is a view in transverse section of the illustrative lockbolt after setting, taken on the line IX - IX of Figure 10 about half-way along the collar;

Figure 10 is a view in longitudinal section through the set lockbolt on the line X - X - X of Figure 9; and

Figure 11 is a view in longitudinal section through a conventional lockbolt set in a conventional manner.

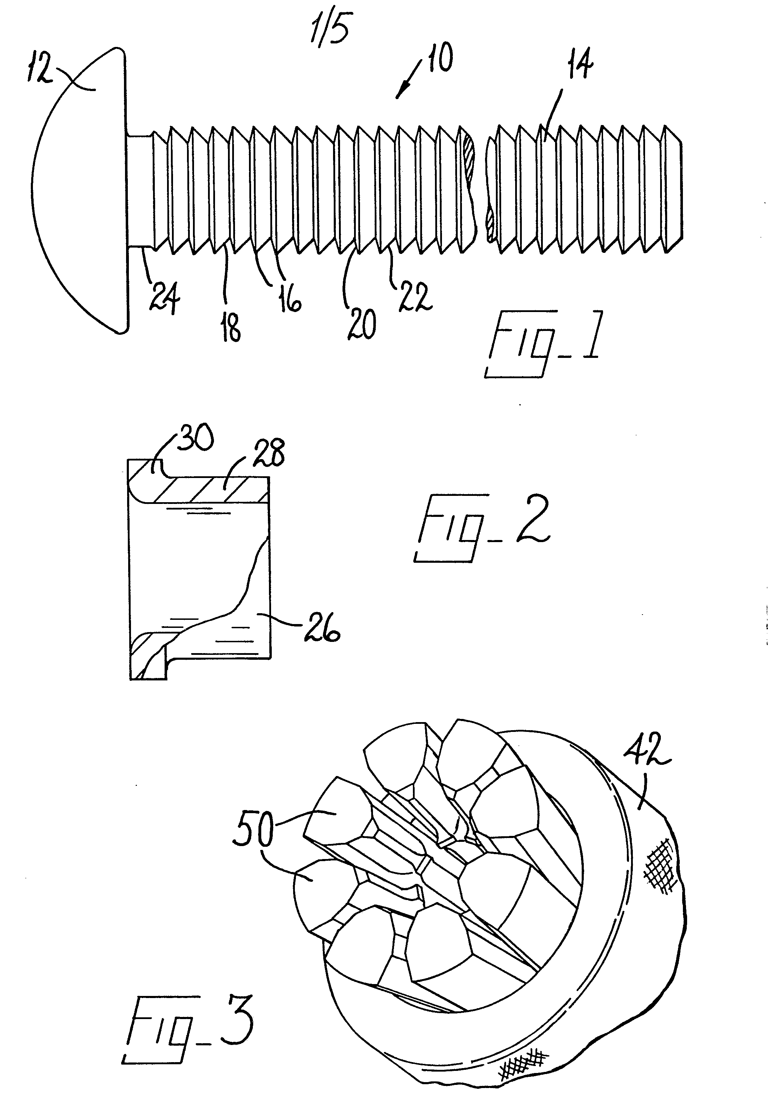

The bolt of the illustrative lockbolt is shown at 10 in Figure 1; it consists of a head 12 and stem 14 on which have been rolled buttress-shaped annular ridges 16 and grooves 18, each ridge 16 having a side 20 steeply inclined to the axis of the bolt facing the head 12 and a less steeply inclined side 22 facing away from it. The annular ridges and grooves are of uniform diameter and are disposed uniformly along the stem from a smooth cylindrical portion 24 of less diameter than the ridges near the head of the bolt. The bolt is made of any suitable metal, for example carbon steel, stainless steel or aluminium.

The illustrative lockbolt also comprises a collar 26 (Figure 2) made by pressing from metal strip; any suitable metal may be used, and it may, or may not be the same as that of the bolt.

The collar 26 has a cylindrical portion 28 of uniform diameter with a flange 30 at one end. Conveniently, the ratio of the outer diameter to the inner diameter of the sleeve portion is 1.15-1.26:1. The collar is of a size to slip easily over the annular ridges of the bolt.

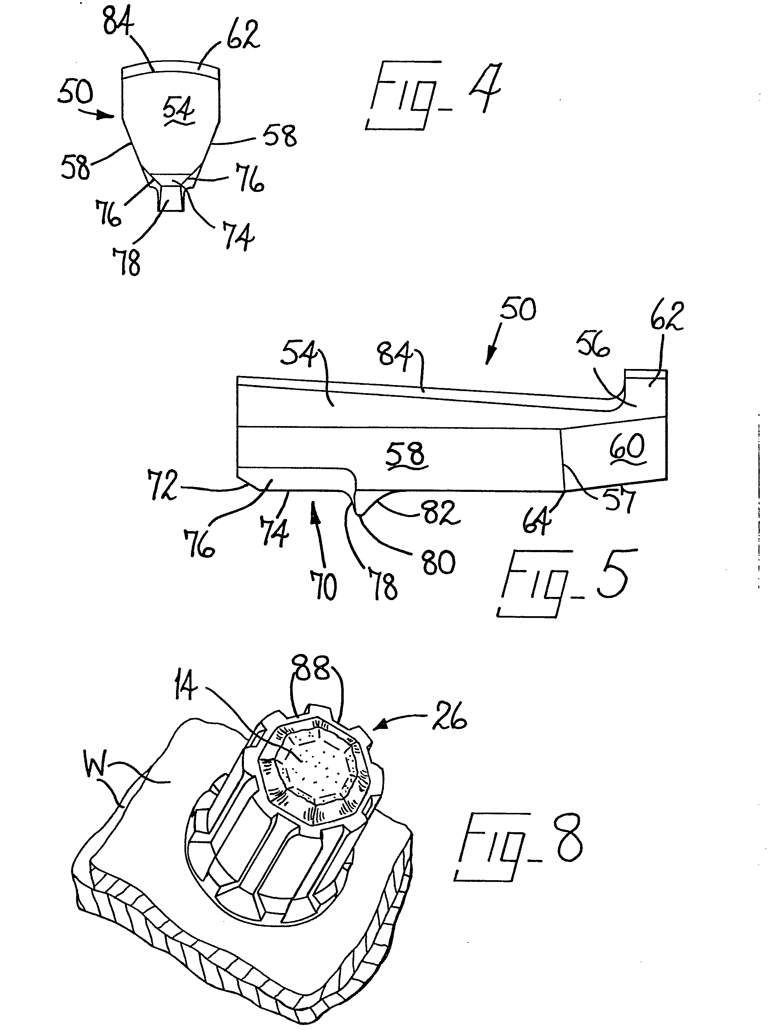

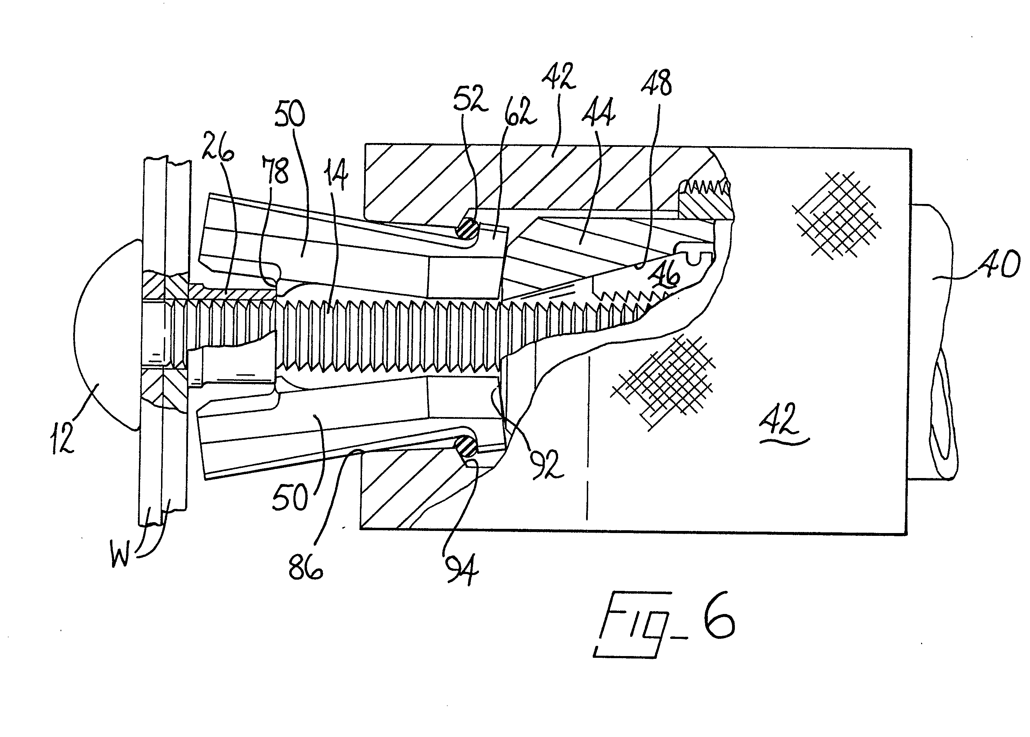

The illustrative tool is of conventional construction except for its forward operative end, to which the following description will accordingly, in general, be confined. The tool comprises a body portion including a sleeve 40 to which a nosepiece 42 (Figures 3, 6 and 7) is removably attached by a screw thread and bolt-pulling means including a jaw case 44 and three jaws 46 (one only visible in Figure 6) to engage the ridges of the bolt to pull it; therefore, the jaws 46 have teeth complementary to the annular ridge and groove formation of the bolt. The jaws 46 and jaw case 44 are of conventional construction, except for the configuration of the teeth of the jaws, the jaws having outer faces for engagement with a frusto-conical inner surface 48 of the jaw case. Conventional power means, preferably including a pneumatic/hydraulic intensifier, is accommodated in the body portion of the tool to cause the jaw case 44 to reciprocate in the sleeve 40. On its rearward stroke, the jaw case 44 urges the jaws toward the axis of the sleeve 40, and their teeth to interengage with the annular ridges of the bolt, so that the stem of the bolt is first gripped and then pulled.

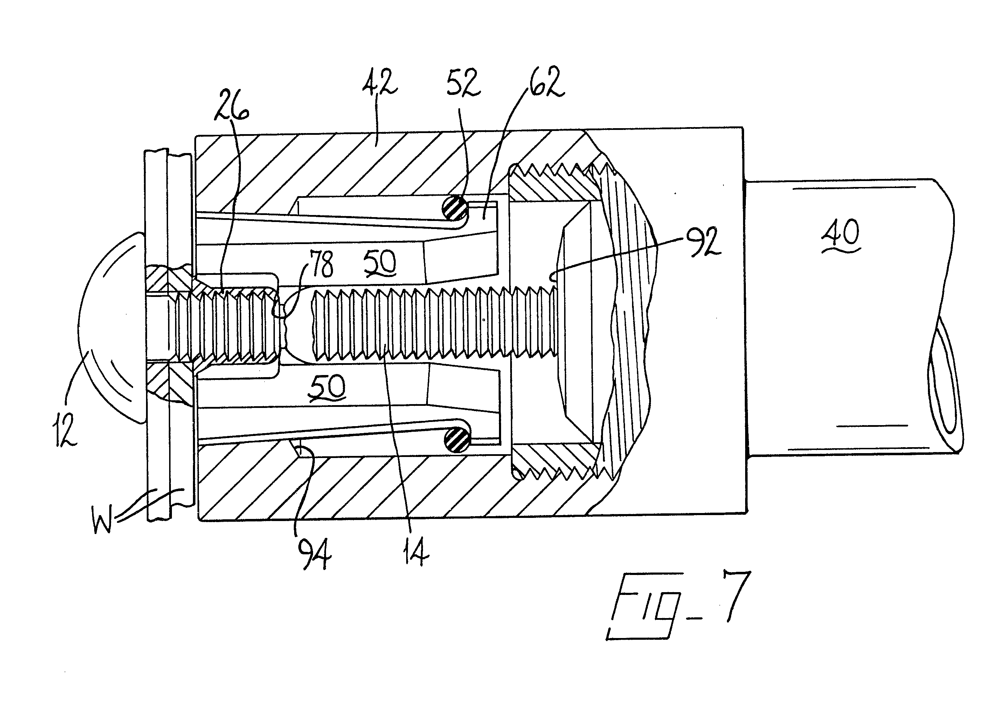

The nosepiece 42 extends forwardly of the sleeve 40 and supports a ring of eight individual swaging jaws 50 (Figure 3) held together by a toroidal section rubber ring 52 (Figure 6). The eight jaws 50 are the same as each other and each one abuts its neighbour on each side. An individual jaw 50 is shown in Figures 4 and 5 and may be regarded as having forward and rearward portions 54 and 56 respectively meeting at corners 57 intermediate the ends of the jaws, viz. about a quarter of the way from the rear. The portions 54, 56 of the jaws have flat side faces 58, 60 respectively where they abut one another, the faces being disposed symmetrically on either side of a central longitudinal plane of the jaw, which is radial to the axis of the sleeve 40 when the jaws are assembled in the nosepiece 42, but whereas the side faces 58 along the forward portion 54 of the jaw are also radial to the axis of the sleeve when the forward portions 54 of the jaws are in contact with one another and the side faces 60 along the rearward portions 56 of the jaws are radial to said axis when the rearward portions are in contact with one another, the line of intersection of the planes in which the side faces 58 lie is inclined at an angle of 7° to that of the planes in which the side faces 60 lie. Thus the jaws have two positions, open positions when the rearward portions 56 are in contact and the line of intersection of the planes in which the faces 60 lie is coincident with the axis of the sleeve, and closed positions when the forward portions 54 are in contact and the line of intersection of the planes in which the faces 58 lie is coincident with said axis. The jaws rock through 7° from the one position to the other about a pivot represented by a line 64 on the inside face of the jaw joining the corners where the forward and rearward portions 54, 56 meet. When in their open positions with the side faces 60 of the rearward portions 56 abutting one another, the forward portions 54 are splayed apart (as shown in Figures 3 and 6) and when in their closed positions (as shown in Figure 7) the side faces 58 of the forward portions 54 abut one another. It is in rocking from the open to the closed positions in the operation of the tool that, as will be seen, crimping of the collar of a lockbolt takes place to displace material into the grooves of the bolt.

The ring 52 which holds the jaws 50 together lies adjacent an outwardly projecting flange 62 which is provided at the rear end of each jaw. Thus, as shown in Figure 6, the jaws normally assume their open condition, the ring being located behind the corners between the forward and rearward portions of the jaws. Closing of the jaws in the operation of the tool is effected by causing the nosepiece 42 to slide forwardly over the splayed portions 54 of the jaws as a result of an operative stroke of the jaw case 44.

Displacement of material into the grooves 18 of the bolt 10 in the operation of the illustrative tool is effected by engagement of the collar 26 by narrow longitudinally extending collar-engaging faces 70 of the jaws 50. The face 70 of each jaw extends along the inner side of the jaw from its front end, where it has a bevel 72, and presents a ridge with a flat top 74 and sloping sides 76 terminating in a shoulder 78 which is itself constituted by a forward face of a transverse ridge 80. The shoulder 78 is steeply inclined to the longitudinal direction of the jaw, a rearward face 82 of the ridge being less steeply inclined, viz. at about 45°. From the front of the jaw, the ridge 80 lies rather less than half way along the forward portion 54.

An outside surface 84 of each jaw 50 is part of a frustum of a cone of very small apical angle, viz. 6°, so that, on the central plane of each jaw, the outer surface is inclined at 3° to the top 74 of the ridge presented by the collar engaging face, the jaws 50 being so designed that the tops 74 of the ridges lie parallel to the axis of the bolt when the jaws are closed.

An operating cycle of the illustrative tool will now be described. With the bolt 10 inserted through aligned holes in parts of a workpiece W to be fastened together with the collar 26 accommodated on the projecting stem 14 of the bolt 10 with its flange adjacent the workpiece, the illustrative tool is presented to the bolt stem, while the head 12 of the bolt is held up to the workpiece at the other side, so that the stem is received between the jaws 46 (see Figure 6). The pulling means is then actuated to cause the jaw case 44 to retract relative to the sleeve 40. First the jaws 46 close upon the bolt stem, their teeth engaging the grooves on the stem and pulling the bolt to ensure its head remains in engagement with the workpiece. Then the nosepiece 42 moves towards the workpiece, its bearing on the outer faces of the splayed jaws 50 causing them, by engagement of their shoulders 78 with the end of the collar remote from the workpiece, to push the collar towards the head 12 of the bolt and clamp the workpiece W therebetween; closing of the jaws 50 at this stage is resisted by the tension of the ring 52 which is holding them open. The assemblage is now ready for the collar to be crimped.

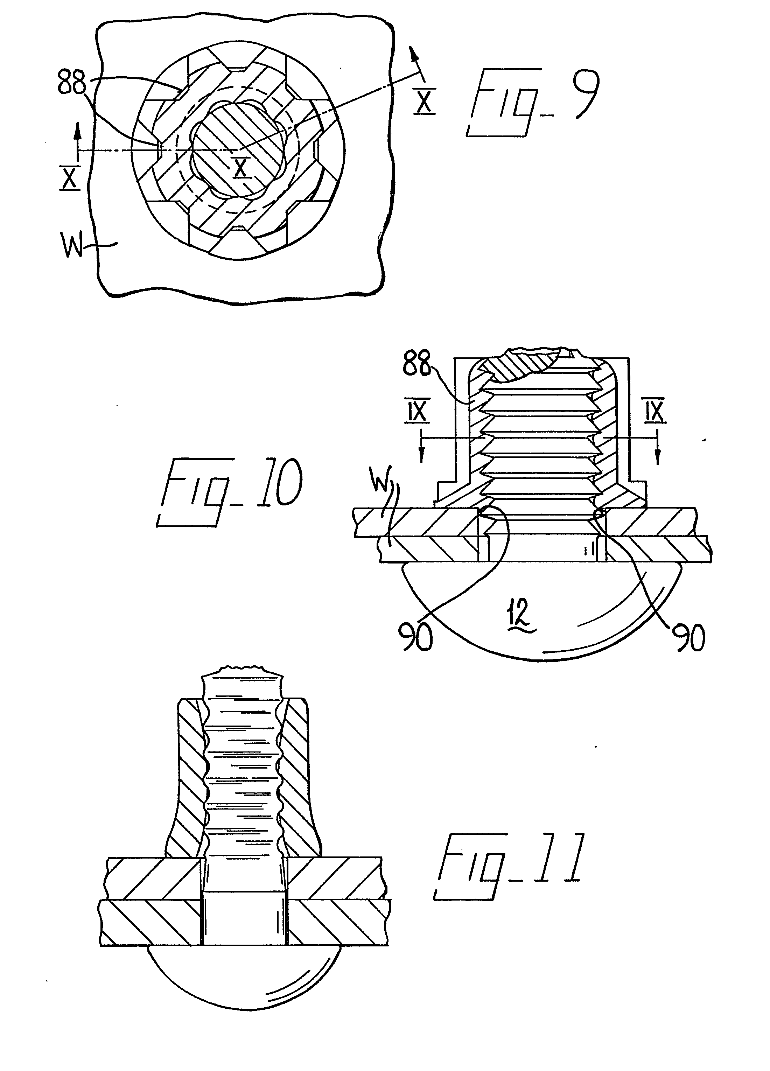

On continuing its forward movement towards the workpiece, the nosepiece 42, the bore in which has a smoothly rounded mouth 86 to reduce friction, advances over the outer faces of the jaws 50 causing them to rock into their closed positions. In so doing, they displace material of the collar 26 into the transverse grooves 18 of the bolt progressively from the end of the collar remote from the workpiece along eight narrow segments 88, such displacement including material of the flange 30. Excess material, resulting from the high clamping force applied to the workpiece, is able to flow into the spaces between the sloping sides 76 of adjacent swaging jaws 50 and into the hole of the workpiece itself around the bolt stem, as indicated at 90 in Figure 10. In addition to displacing the collar material, the ridges 80 of the jaws 50 indent the bolt stem to such a depth, when the jaws finally close and forward motion of the nosepiece 42 is arrested, that the stem 14 of the bolt breaks. Breaking of the stem thus occurs closely adjacent the end of the colar 26 remote from the workpiece (See Figure 7).

The jaws 50 being now tightly impressed on the collar 26, the tool may not readily become detached, but on the reverse stroke of the pulling means a forward end 92 of the jaw case 44 will engage the rear ends of the jaws 50 and assist an inner annular shoulder 94 of the nosepiece, which will engage the ring 52 when the sleeve thereafter retracts, to open the jaws.

The appearance of the collar 26 after setting by the illustrative tool is depicted in Figures 8, 9 and 10. Material of the collar has been swaged into the grooves of the bolt along substantially all its length and sealed the hole in the workpiece to give a sound reliable joint. Figures 9 and 10 show in cross section how the material of the collar has been swaged into the grooves 18 of the bolt to a greater or lesser extent all the way round the bolt, and, in particular, to the full depth of the grooves 18 substantially over the whole length of the collar 26 along the narrow segments 88. By contrast, in Figure 11 is shown in section a typical conventional setting of a lockbolt by an annular anvil; while the penetration of material of the collar takes place to the same depth all the way round the bolt, it does not do so to the full depth of the grooves nor over substantially the whole length of the collar.

In setting the illustrative lockbolt, a high pull-off load is achieved with a relatively low setting load and with less metal in the collar than has been customary with lockbolts hitherto. The collars, made by pressing sheet metal, are inexpensive and readily manufactured.

14.

Claims:-

1. A method of setting a lockbolt comprising the steps of inserting the bolt through a hole in a workpiece from one side of the workpiece, passing the collar over the stem projecting at the other side, pushing the collar towards the workpiece while pulling the bolt stem to clamp the workpiece between the collar and the head of the bolt, and then causing material of the collar to be swaged into locking grooves of the bolt characterised in that in the swaging operation displacement of the material of the collar (26) takes place progressively from the end of the collar remote from the workpiece (W) along narrow circumferentially spaced segments (88) extending longitudinally of the bolt (10).

2. A method according to claim 1 further characterised in that the displacement of material of the collar (26) is effected by a plurality of jaws (50) which rock about axes at right angles to the lengthwise direction of the bolt (10) and not substantially further from the bolt axis than the surface of the collar to be engaged by the jaws.

3. A method according to claim 2 further characterised in that the collar (26) is surrounded by said plurality of jaws (50) from five to twelve in number, each with a shoulder (78) which engages the end of the collar remote from the workpiece and a collar-engaging face (70) extending from the shoulder towards the workpiece, the jaws (50) engaging the collar (26) initially by their shoulders (78) at its end remote from the workpiece (W) with their collar-engaging faces (70) splayed outwardly from the collar (26) and then being pressed towards the bolt (10) to displace the material of the collar as aforesaid.

4. A method according to claim 3 further characterised in that the bolt (10) is provided with transverse grooves uniformly along that portion of the stem (14) that is at the locality of the shoulders (78) of the jaws, said shoulders (78) projecting far enough as ridges (80) towards the axis of the bolt to be forced into the material of the bolt (10) to weaken it and thereby cause it to break adjacent the collar (26) under increased tension applied to the bolt stem after setting the collar.

5. A lockbolt comprising a headed bolt (10) and a collar (26), the bolt stem (14) being provided with transverse locking grooves (18) into which material of the collar (26) can be swaged to lock the bolt (10) and collar (26) together, characterised in that the collar (26) has a relatively thin wall portion (28) of uniform cross-section terminating in a flange (30) at one end.

6. A lockbolt according to claim 5 further characterised in that said wall portion (28) of the collar (26) is cylindrical with a ratio of outside diameter to inside diameter of 1.15-1.26:1.

7. A lockbolt according to claim 6 further characterised in that said transverse grooves (18) on the bolt (10) are annular, the walls (20) of the grooves facing the head of the bolt being more steeply inclined to its axis than those (22) facing away from it.

8. A lockbolt setting tool comprising a sleeve which has a nosepiece which supports an anvil at its forward end for engagement with the collar of a lockbolt, bolt-pulling means for engaging and pulling the stem of the bolt and which is mounted for axial reciprocation along the sleeve, and power-operated means for effecting a rearward pulling stroke of the bolt-pulling means, characterised in that the anvil is constituted by a plurality of individual jaws (50) arranged in a ring within an aperture (86) at the forward end of the sleeve (42), each jaw (50) having a shoulder (78) to engage the end of the collar (26) remote from the workpiece (W) and a collar-engaging face (70) extending forwardly from the shoulder, the jaws (50) being thus constrained to rock transversely of the axis of the sleeve (42) about the end of the collar (26) when the shoulders (78) are in engagement therewith from open positions in which their collar-engaging faces (70) splay outwardly from the shoulders (78) to closed positions in which the said faces are parallel to the axis of the sleeve (42), material of the collar during such rocking of the jaws in a lockbolt-setting operation being effective to displace material of the collar (26) progressively from the end engaged by the shoulders (78) of the jaws (50) along narrow circumferentially spaced segments (88) extending longitudinally of the bolt (10).

9.    A tool according to claim 8 further characterised in that the swaging jaws (50) abut one another, a forward portion (54) of each jaw which includes the collar-engaging portion having a pair of flat side faces (58) symmetrically disposed on either side of a longitudinally central plane of the jaw and lying in planes which are radial to the sleeve (42) when the jaws are closed and the faces of adjacent jaws are in contact with one another, and a rearward portion (56) of each jaw having similar side faces (60) which are in contact with one another when the jaws are in their open positions, inner faces of the forward and rearward portions of each jaw thus meeting along a line which is at right angles to said central plane and about which the jaws rock when moving from one position to the other.

10. A tool according to claim 9 further characterised in that the swaging jaws (50) are arranged to be rocked from their open to their closed positions by advance of the sleeve (42) along the jaws.

11. A tool according to claim 10 further characterised in that the jaws (50) are held together by resilient means (52) urging the jaws to their open positions.

12. A tool according to claim 9 further characterised in that each jaw (50) has an inwardly projecting part-circumferential ridge (80) continuous with said shoulder (78) by which, on closing of the jaws, the stem of a bolt (10) can be indented, thereby to weaken the bolt so that it will break under tension.

0052480

1/5

12

10

14

24   18   16   20   22

*Fig_1*

30   28

*Fig_2*

26

42

50

*Fig_3*

Fig_4

Fig_5

Fig_8

Fig-6

Fig_7

88

W

Fig_9

88

Fig_10

IX

IX

W

90

12

90

Fig_11

**European Patent Office**

**EUROPEAN SEARCH REPORT**

Application number

EP 81 30 5361.8

| Category | Citation of document with indication, where appropriate, of relevant passages | Relevant to claim |
|---|---|---|
| Y | DE - B - 1 500 784 (HUCK MANUFACTURING)<br>* fig. 5 * | 1-3,<br>8-10 |
| Y | DE - U - 7 230 937 (AERPAT)<br>* fig. 1 * | 2,3,11 |
| Y | CH - A - 347 060 (HUCK MANUFACTURING)<br>* fig. 10 * | 2,3 |
| Y | GB - A - 780 367 (THE ARO EQUIPMENT)<br>* fig. 9 * | 2,3 |

**DOCUMENTS CONSIDERED TO BE RELEVANT**

**CLASSIFICATION OF THE APPLICATION (Int. Cl. 3)**

B 21 J 15/04

**TECHNICAL FIELDS SEARCHED (Int.Cl. 3)**

B 21 J 15/00

F 16 B 19/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 08-02-1982 | ZAPP |

EPO Form 1503.1  06.78